# EUROPEAN PATENT SPECIFICATION

(11) **EP 4 573 882 B1**
(45) Date of publication and mention of the grant of the patent: **12.08.2026**
(21) Application number: 25169687.8
(22) Date of filing: 05.04.2023
(51) Int. Cl.: A01D 75/18, A01F 12/28

(54) **AN ADJUSTMENT AND RELEASE UNIT FOR A CONCAVE OF A THRESHING SYSTEM OF A COMBINE HARVESTER**
VERSTELL- UND FREIGABEEINHEIT FÜR EINEN DRESCHKORB EINES DRESCHSYSTEMS EINES MÄHDRESCHERS
UNITÉ DE RÉGLAGE ET DE DÉBLOCAGE POUR UN CONTREBATTEUR D'UN SYSTÈME DE BATTAGE D'UNE MOISSONNEUSE-BATTEUSE

(30) Priority: 08.04.2022 GB 202205166; 08.04.2022 GB 202205167; 08.04.2022 GB 202205169
(43) Date of publication of application: 25.06.2025
(62) Document number(s) of the earlier application(s) in accordance with Art. 76 EPC: 23720988.7 / 4 503 911
(73) Proprietor: AGCO International GmbH, 8212 Neuhausen am Rheinfall (CH)
(72) Inventor: Andersen, Andreas Rye, 87616 Marktoberdorf (DE)
(74) Representative: AGCO Intellectual Property Department

(56) References cited:
- CN-B- 110 692 346
- DE-C1- 4 321 272
- US-A1- 2016 120 127
- US-A1- 2021 282 328

## Description

### FIELD

Embodiments of the present disclosure relate generally to combine harvesters, and in particular to a mechanism for releasing the concave of a threshing system of the combine harvester.

### BACKGROUND

A combine harvester typically includes a threshing system for detaching grains of cereal from the ears of cereal, a separating apparatus downstream of the threshing system, and a grain cleaning apparatus for receiving grain from the separating apparatus. A stratification pan aims to stratify the material into a layered structure of grain at the bottom and light chaff and other material other than grain (MOG) at the top.

There are various designs for the threshing system and for the separating apparatus (e.g. axial or transverse) as well as for the grain cleaning apparatus. However, in all designs, there is a flow of material from the threshing system to the separating apparatus, and between the separating apparatus and the grain cleaning unit, in particular from the stratification pan to the grain cleaning unit. The flow can either pass from the stratification pan directly to the grain cleaning unit or there may an intermediate cascade pan between the stratification pan and the grain cleaning unit.

The threshing system typically comprises threshing rotors that rotate with respect to concave gratings (known simply as "concaves"). As mentioned above, the threshing rotors may be arranged transversally or longitudinally with respect to the direction of travel of the combine harvester.

The distance between the concaves and the rotors is adjustable, so that the threshing system may be configured for different crop types and harvesting conditions. A safety mechanism is also used to protect the combine when dense swathes of crops or large rigid objects enter the machine, such as stones or pieces of metal or wood or just wet clumps of crop material.

Traditionally, a shear-bolt system is installed. When a large object enters the space between a rotor and a concave, the instantaneous force breaks the bolt, and the concave falls away (i.e. is released) from the rotor, so as to prevent damage.

It has been proposed in EP 3 178 309 to provide a resettable spring-biased system for releasing the concave from the rotor to allow large objects to pass. This avoids the need to stop the combine harvester and replace the shear-bolt whenever a breakage occurs. This reduces downtime. However, this solution requires a complex additional mechanism, adding cost and complexity. It also releases all concaves of a multi-rotor system, so that none of the threshing rotors remains functional when there is a release event. The resetting of the release mechanism is a manual process (for safety reasons) which also takes time and skill.

An adjustment and release unit for a combine harvester having the features of the precharacterising portion of claim 1 is known from DE 43 21272 (Mähdresherwerke AG).

There is therefore a need for an improved release mechanism for releasing the concave of a threshing system from a threshing rotor.

### BRIEF SUMMARY

The invention is defined by the claims.

According to the invention there is provided an adjustment and release unit for supporting a concave beneath a threshing system of a combine harvester, the adjustment and release unit comprising:
a spring-biased unit which has a first, active, configuration and a second, released, configuration, wherein the adjustment and release unit is drivable from the first configuration to the second configuration in response to foreign objects entering the threshing system against the spring bias force;
a sensor for sensing if the adjustment and release unit is in the first or second configuration; and
an output system for reporting the configuration of the adjustment and release unit, characterised in that the adjustment and release unit further comprises a memory for storing the configuration and of the adjustment and release unit together with associated position data indicating the position of the combine harvester.

This aspect may be applied to different designs of the spring-biased adjustment and release units, and it provides an automated report of the configuration of the unit (i.e. in normal harvesting position or in the released position). The active configuration is one in which harvesting is performed, with the concave at a desired (and user-selected) spacing from the concave. The released configuration enables a blockage to be released. The configuration may be reported simply as an output for the operator, e.g. to be displayed on a screen, or it may be reported to a control system which implements automated resetting of the adjustment and release unit.

The sensor for example comprises one or more of:
a distance sensor for sensing a distance between a first and second locations of the adjustment and release unit, wherein the distance depends on the configuration;
a rotation sensor for sensing a rotation angle between first and second components of the adjustment and release unit, wherein the rotation angle depends on the configuration.

These options for the sensor are based on sensing the change in shape of the adjustment and release unit itself.

The sensor may comprise a direction sensor for sensing an angle of a component of the adjustment and release unit, wherein the direction depends on the configuration.

This option for the sensor is based on sensing the change in orientation of the adjustment and release unit, e.g. relative to an external static (i.e. fixed relative to the combine harvester chassis) component.

The sensor may comprise a contact sensor arrangement for sensing if there is contact at first or second locations between components of the adjustment and release unit, wherein the contact at the first or second location depends on the configuration.

This option for the sensor is based on use of an electric circuit which detects contacts which are representative of the configuration of the adjustment and release unit.

The sensor may comprise an inertia measurement unit for sensing a motion or position which depends on the configuration. This detects absolute motion rather than a geometric shape change.

The adjustment and release unit may further comprise an actuator for setting a pre-bias of the spring. In this way, the threshold force from the crop at which the concave is released can be adjusted, for different types of crop or other ground conditions. The actuator is for example for moving an end support of the spring, e.g. at an opposite end of the spring to an end which connects to the second frame element.

The adjustment and release unit of this aspect may comprise a first frame element and a second frame element pivotally connected together at a pivot connection, wherein the first and second frame elements have first and second stable angular orientations relative to each other,
wherein the first frame element comprises:
   a first mounting for fixing the first frame element to a rotary control shaft;
   a first connection point for connection to a concave support arm which extends to the concave, wherein an angular orientation of the rotary control shaft determines a depth of the concave beneath the adjustment and release unit,
wherein the second frame element comprises:
   a second connection point for connection to a concave height adjustment unit; and
   a spring for biasing the pivotal connection between the first and second frame elements towards the stable orientations,
wherein the adjustment and release unit is adapted to be released from the first stable orientation by a force applied at the first connection point which is sufficient to overcome a biasing force of the spring, thereby to enable pivoting of the first and second frame elements relative to each other into the second stable orientation.

As outlined above, the second frame element for example comprises first and second limbs which are pivoted together at the second connection point, wherein the spring is for pulling the first and second limbs together. The adjustment and release unit may again further comprise a height adjustment unit connected to the second connection point. The height adjustment unit may be controllable to adjust the position of the second connection point to reset the adjustment and release unit from the second stable angular orientation to the first stable angular orientation.

In this aspect, the disclosure also provides a threshing system for a combine harvester, comprising:
a threshing unit;
a concave beneath the threshing unit; and
the adjustment and release unit as defined above for supporting the concave beneath the threshing unit.

A rotary control shaft may be provided for controlling depth of the concave beneath the threshing unit.

The adjustment and release unit for example supports the concave at one end of the rotary control shaft and a rigid coupling supports the concave at an opposite end of the rotary control shaft.

Thus, only one active system (i.e. adjustment and safety release system) is needed, at one end of the rotary control shaft. However, there may be an active system at each end.

The threshing system may comprise two or more threshing units, wherein each threshing unit has a respective associated concave and a respective adjustment and release unit as defined above, wherein the adjustment and release units are independently controllable. This means one threshing unit can be released but the combine harvester can continue harvesting if desired, with the other concave still held at the normal operating position relative to its threshing unit (i.e. rotor).

The threshing units for example comprise axial-flow threshing cylinders.

The invention also provides a combine harvester comprising:
a crop cutting head;
the threshing system as define above; and
a grain cleaning system for receiving the cut and threshed crop material.

When the adjustment and release unit has sensing functionality, the combine harvester may further comprise a controller which is adapted to:
reduce the speed of the combine harvester in response to sensing transition of the adjustment and release unit to the second configuration;
maintain a reduce speed during resetting of the adjustment and release unit to the first configuration; and
increase the speed of the combine harvester after the resetting.

In this way, the combine harvester speed may be reduced during resetting of the concave. The speed reduction for example takes place as soon as any one threshing unit has released (even if another threshing unit is still in the active configuration).

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
Figure 1 shows a combine harvester which may be adapted in accordance with the invention;
Figure 2 shows one example of threshing system and grain cleaning apparatus in more detail;
Figure 3 shows a control mechanism for a system with two concaves, each positioned beneath a respective threshing rotor;
Figure 4 shows the control system from a different viewpoint;
Figure 5 shows an adjustment and release unit, which forms part of a crank coupled to each rotary control shaft;
Figure 6 shows the adjustment and release unit from a different view;
Figure 7 shows the adjustment and release unit and the connected parts;
Figure 8 shows how the adjustment and release unit is adjusted from a first stable configuration to a second stable configuration;
Figure 9 shows how the adjustment and release unit may be reset from the second stable configuration to the first stable configuration;
Figures 10 to 15 show various possible sensor approaches for sensing the configuration of the adjustment and release unit;
Figure 16 shows how the torque or forces at the rocker shaft may be measured;
Figure 17 shows how the combine harvester speed may be automatically controlled in dependence on the configuration of the adjustment and release unit and/or torque or force information ; and
Figure 18 shows a system comprising an actuator for setting a pre-bias of the spring of the adjustment and release unit.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure in one aspect relates the design of a release unit for releasing the concave of a threshing system, to allow large objects to be released from the space between the threshing rotor and concave. In other aspects, the disclosure relates to sensing and actuation functions associated with a concave release function.

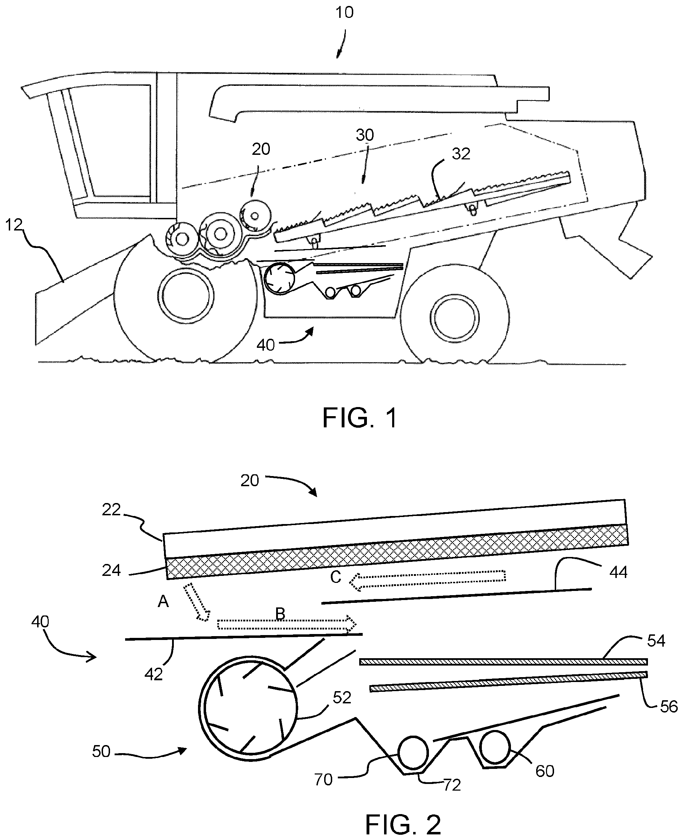

Figure 1 shows a known combine harvester 10 to which the invention may be applied. The combine harvester includes a threshing system 20 for detaching grains of cereal from the ears of cereal, and a separating apparatus 30 which is connected downstream of the threshing system 20. The threshing system comprises one or more threshing units, in particular rotors, and associated concaves. In the example shown, the separating apparatus 30 includes a plurality of parallel, longitudinally-aligned, straw walkers 32, and this is suitable for the case of a so-called straw-walker combine. The grains after separation by the separating device 30 pass to a grain cleaning apparatus 40.

The combine harvester has a front elevator housing 12 at the front of the machine for attachment of a crop cutting head (known as the header, not shown). The header when attached serves to cut and collect the crop material as it progresses across the field, the collected crop stream being conveyed up through the elevator housing 12 into the threshing system 20.

In the example shown, the threshing system 20 is a tangential-flow 'conventional' threshing system, i.e. formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material, the majority of the threshed grain passing through the underlying grate and onto a stratification pan (also sometimes known as the grain pan).

There are also axial threshing systems, i.e. formed by rotating elements with an axis of rotation in the longitudinal direction (direction of travel). For example, the threshing section may have axially-aligned rasp bars spaced around the front section whilst the separating section has separating elements or fingers arranged in a pattern, e.g. a spiral pattern, extending from the rasp bars to the rear of the rotor.

An axial threshing (and separating) system 20 is shown in Figure 2, together with a cleaning apparatus 40.

The threshing system 20 comprises an axial rotor 22 beneath which is mounted the concave 24. The concave may have different sections along its length, and the first section to receive the crop material (to the left in Figure 2) may have a releasable concave, or else the whole length of the concave may be releasable. The separating function involves conveying the crop stream rearwardly in a ribbon passing along a spiral path.

The initial threshing creates a flow of grain to a stratification pan 42. The separating function further downstream of the threshing system serves to separate further grain from the crop stream and this separated grain passes through a grate-like structure onto an underlying return pan 44. The residue crop material, predominantly made up of straw, exits the machine at the rear. Although not shown in Figure 1, a straw spreader and/or chopper may be provided to process the straw material as required.

The threshing apparatus 20 does not remove all material other than grain, "MOG", from the grain so that the crop stream collected by the stratification pan 42 and return pan 44 typically includes a proportion of straw, chaff, tailings and other unwanted material such as weed seeds, bugs, and tree twigs. The remainder of the grain cleaning apparatus 40 is in the form of a grain cleaning unit 50. The grain cleaning unit 50 remove this unwanted material thus leaving a clean sample of grain to be delivered to the tank.

The grain cleaning unit 50 comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The general flow of material is as follows. The grain passing through the concave 24 falls onto the front of stratification pan 42 as indicated by arrow A in Figure 2. This material is conveyed rearwardly (in the direction of arrow B in Figure 2) by the oscillating motion of the stratification pan 42 and the ridged construction thereof. Material passing through the concave further back falls onto the return pan 44 and is conveyed forwardly by the oscillating motion and ridged construction thereof as shown by arrow C.

It is noted that "forwardly" and "rearwardly" refer to direction relative to the normal forward direction of travel of the combine harvester.

When the material reaches a front edge of the return pan 44 it falls onto the stratification pan 42 and is conveyed as indicated by arrow B.

The combined crop streams thus progress rearwardly towards a rear edge of the stratification pan 42. Whilst conveyed across the stratification pan 42, the crop stream, including grain and MOG, undergoes stratification wherein the heavier grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the heavier grain to pass through the chaffer onto an underlying second sieve 56.

The chaffer 54 is coarser (with larger holes) than second sieve 56. Grain passing through chaffer 54 is incident on the lower sieve 56 which is also driven in an oscillating manner and serves to remove tailings from the stream of grain before being conveyed to on-board tank (not shown) by grain collecting auger 70 which resides in a transverse trough 70 at the bottom of the grain cleaning unit 50. Tailings blocked by sieve 56 are conveyed rearwardly by the oscillating motion thereof to a rear edge from where the tailings are directed to the returns auger 60 for reprocessing in a known manner.

This disclosure relates to the design of the threshing system, and in particular it relates to a function of opening the space between the threshing rotor and the concave beneath, to prevent blockage. The disclosure also relates to sensing and actuation aspects associated with this concave release function.

A blockage results in overload in the threshing system and can be caused by foreign objects such as stones (that have passed a stone trap), or simply by high moisture crop lumps which are especially found in grass seed and spring barley.

The invention will be described with reference to an axial threshing system, although it will be appreciated that the same concepts may be applied to a transverse threshing system.

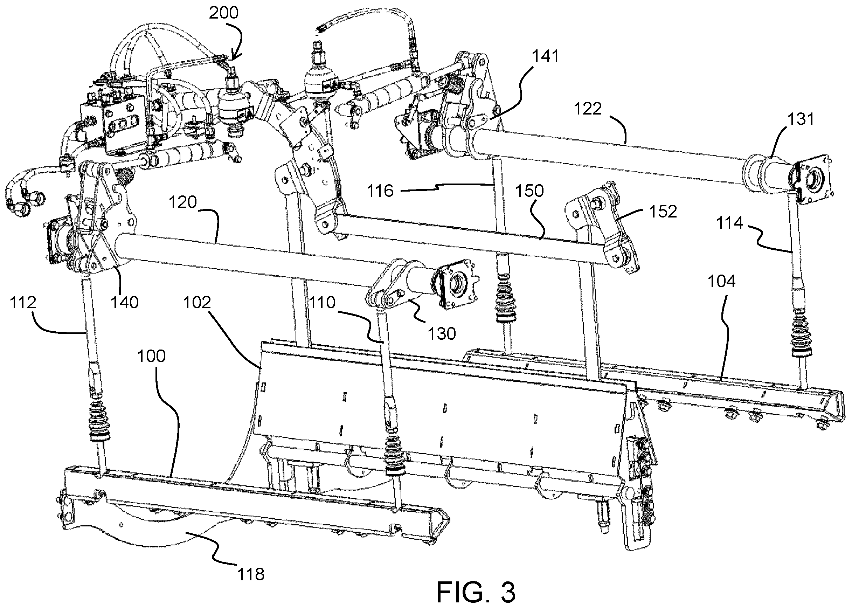

Figure 3 shows part of the threshing system, in particular a part that controls the position of the concave, and hence the spacing between the concave and the threshing rotor.

Figure 3 shows a control mechanism for implementing a release function for a system with two concaves, each positioned beneath a respective threshing rotor.

A first concave is supported by a first outer rail 100 and an inner rail 102. A second concave is supported by the inner rail 102 and a second outer rail 104.

The first outer rail 102 is suspended by a first pair of vertical rods 110, 112 and the second outer rail 104 is suspended by a second pair of vertical rods 114, 116. The connections at the bottom ends of the vertical rods are shown protected by bellows. By adjusting the height of the vertical rods, the position of the concave relative to the threshing rotor is adjustable. The shape of the concave can be seen from the shape of a connecting bar 118.

A first rotary control shaft 120 is used to control the height of the first pair of vertical rods and a second rotary control shaft 122 is used to control the height of the second pair of vertical control rods. Each control rod connects to a crank which rotates with its respective rotary control shaft.

The first rotary control shaft 120 for example has a first crank 130 at one end and a second crank 140 at the other end. The first crank 130 is a simple passive unit, which directly converts the angular position of the first rotary control shaft 120 into a vertical height. The second crank 140 is part of a more complicated structure, and in particular it incorporates an adjustment and release unit described below, which thus provides part of the function of supporting the concave beneath the threshing rotor.

The second rotary control shaft 122 has a corresponding pair of cranks 131, 141.

The adjustment and release units have a sensing and actuation system 200, described in more detail below. This can for example be used to set a current default spacing between the concave and the threshing rotor, as well sensing the configuration of the adjustment and release units.

The inner rail 102 also has an adjustable height, by means of push rod 150 and pivot mechanism 152.

Thus, the inner rail and the outer rails may be set to a default height by adjusting the position of the push rod 150 (by means of the sensing and actuation system 200) and by adjusting the angular orientation of the rotary control shafts. The middle rail thereby adjusts the outlet side of the concave whereas the outer rails adjust the inlet side. However, it is not essential to have both inlet and outlet adjustment.

During harvesting, material entering the space between the concave and the threshing rotor (with a size set depending on the crop and harvest conditions) will exert a downward force on the concave (and an upward force on the rotor). In the case of large debris, this could cause damage to the combine harvester, so it is desirable to release the concave (i.e. increase the spacing to the rotor) to allow the debris to be expelled from the threshing system.

As explained above, it is known from EP 3 178 309 to provide a spring-biased release unit which has a first, active, configuration and a second, released, configuration. The release unit is drivable from the first configuration to the second configuration in response to foreign objects entering the threshing system against the spring bias force.

The system of Figure 3 also has a spring-biased release system, which is used to drop an outer rail when a force exceeding a threshold is exerted against the concave. The release mechanisms for the two concaves are independent, so that each one can be released independently of the other. When released, the concave pivots open about the inner rail, which remains at the previously set height.

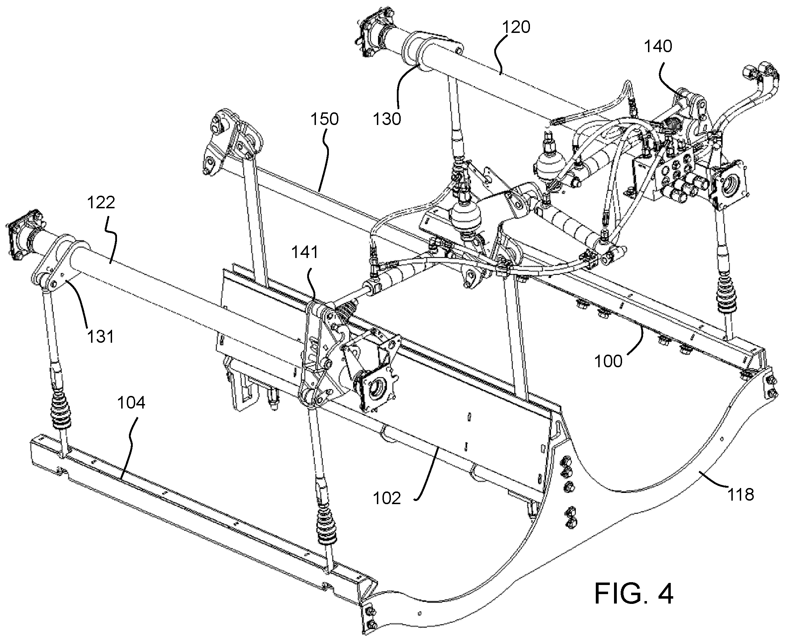

Figure 4 shows the control system from a different viewpoint.

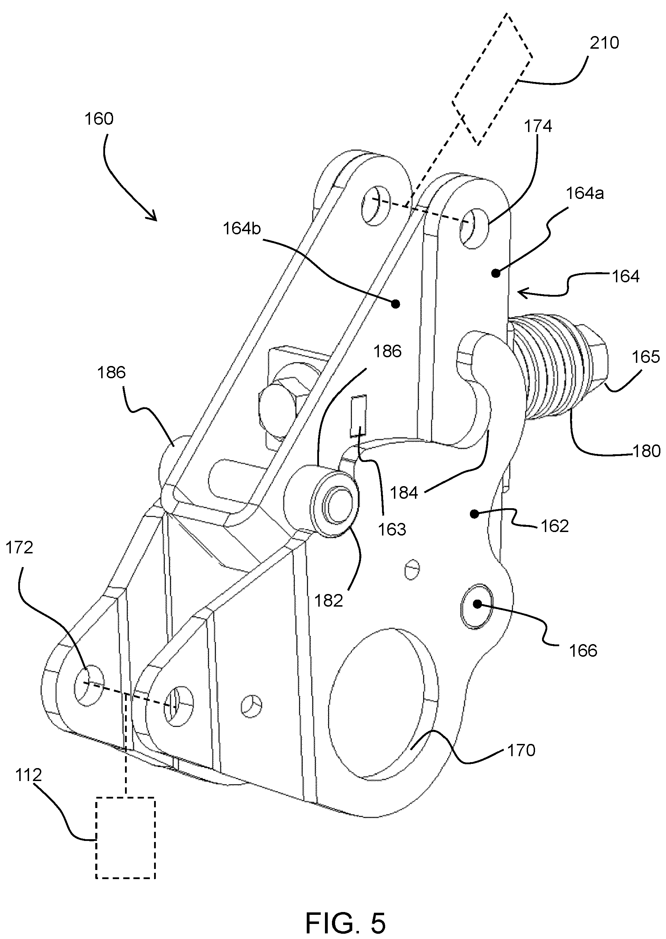

Figure 5 shows the adjustment and release unit 160, which forms part of the second cranks 140, 141 coupled to each rotary control shaft. The unit is referred to as a "release unit" in the following.

The release unit 160 comprises a first frame element 162 and a second frame element 164. They are pivotally connected together at a pivot connection 166. Thus, they can rotate relative to each other, and in particular they have first and second stable angular orientations relative to each other.

The first frame element 162 comprises a first mounting 170 for fixing the first frame element 162 to the associated rotary control shaft. A first connection point 172 is for connection to the associated vertical rod (shown schematically as 112), which functions as a concave support arm. The angular orientation of the rotary control shaft determines a depth of the concave beneath the release unit as explained above.

The second frame element 164 has a first limb 164a and a second limb 164b and they are pivotally connected together at a second connection point 174. This second connection point also connects to a concave height adjustment unit (shown schematically as 210). The height adjustment unit 210 is controllable to adjust a default position of the second connection point 174, and thereby set the angular position of the rotary control shaft. The height adjustment unit comprises a hydraulic system.

A spring 180 is provided for biasing the pivotal connection between the first and second frame elements towards the stable orientations. In particular, the spring 180 pulls the first and second limbs 164a, 164b together.

The spring is connected at a first end to the first limb 164a of the second frame element and is connected at a second end to a spring stop 165. This spring stop 165 connects via a bolt to the second limb 164b, in particular a mounting plate 163. Thus, the spring pulls the first and second limbs 164a, 164b together, and thereby pulls the second frame element 164b. in particular the second limb 164b, towards the first frame element 162.

The first frame element 162 comprises first and second notches 182, 184 and the second frame element, in particular the second limb 164b, comprises a roller 186 for engagement in one of the notches.

Figure 5 shows the release unit in a first stable orientation, which for the normal combine harvesting (with the concave engaged rather than released). The roller 186 is engaged in the first notch 184. The spring force pulls the roller into the notch and thereby locks the two frame elements 162,164 together, into the first stable orientation.

A downward force from the vertical rod 112 tries to rotate the first frame element 162 relative to the second frame element 164, to open the first and second limbs and thereby release the roller 186 from the notch 182, but this is resisted by the spring force.

Only if the spring force is overcome will the roller 186 be released from the first notch 182. The first frame element will then rotate relative to the second frame element, and the first and second limbs 164a, 164b will open apart to release the roller from the first notch 182, until the roller engages with the second notch 184. The release unit is in then in the second stable configuration, and there is a different geometrical configuration of the release unit. In particular, the first connection point 172 moves down, thereby rotating the rotary control shaft. The second crank thus drops the end of the concave, but also the first crank 130 also drops the other end of the concave. Thus, the second crank is pulled down, the configuration of the release unit changes such that release unit drives the rotary control shaft, and the passive crank 130 is also driven.

In this way, the release unit is released from the first stable orientation by a force applied at the first connection point 172 which is sufficient to overcome the biasing force of the spring, thereby to enable pivoting of the first and second frame elements relative to each other into the second stable orientation.

When the release is implemented, a lump of crop or foreign object is transported away from the concave area and avoids damage on the rocker shaft and concave adjustment system.

If the biggest contribution of concave loading comes through the passive crank vertical rod, then torsion will be created in the rocker shaft. This torsion will act in the same manner as the concave force at the location of the active crank and also create the release movement.

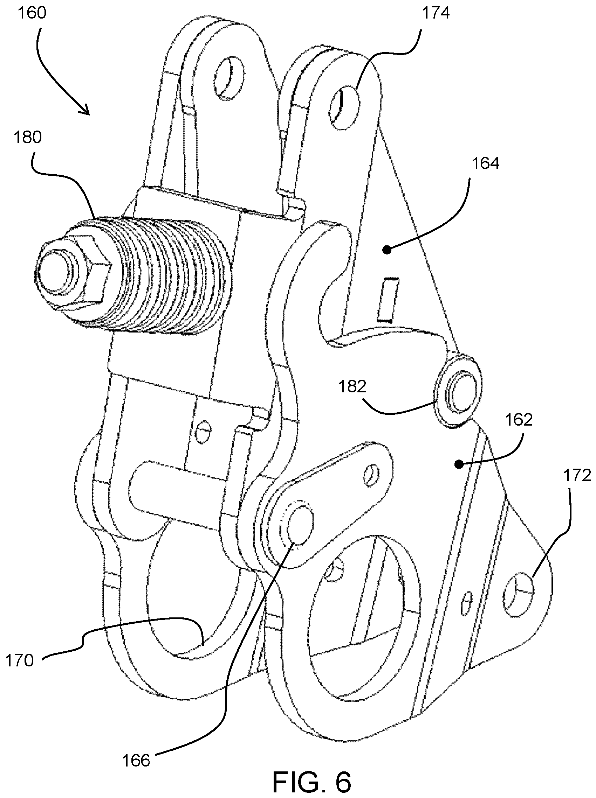

Figure 6 shows the release unit, again in the first stable orientation, from a different view.

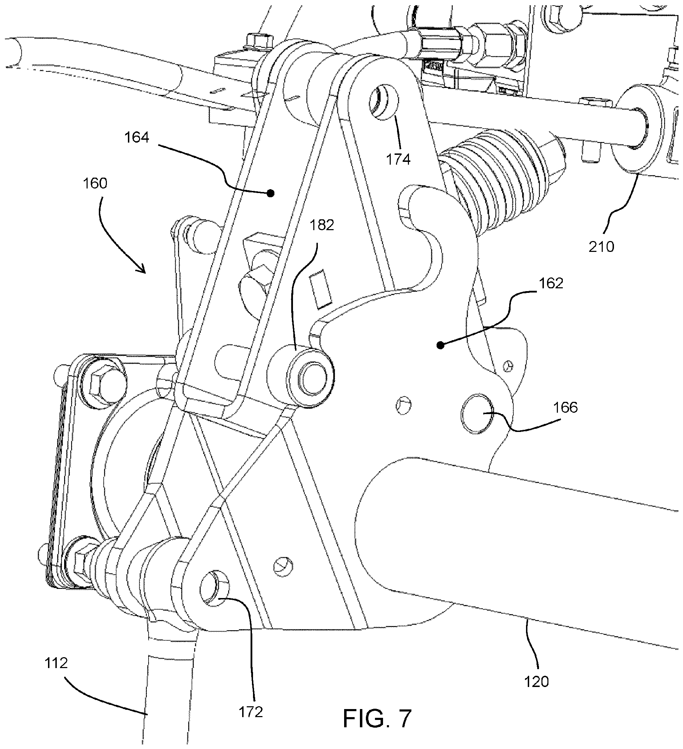

Figure 7 shows the release unit and the connected parts, in particular the associated vertical control rod 112 and the height adjustment unit 210.

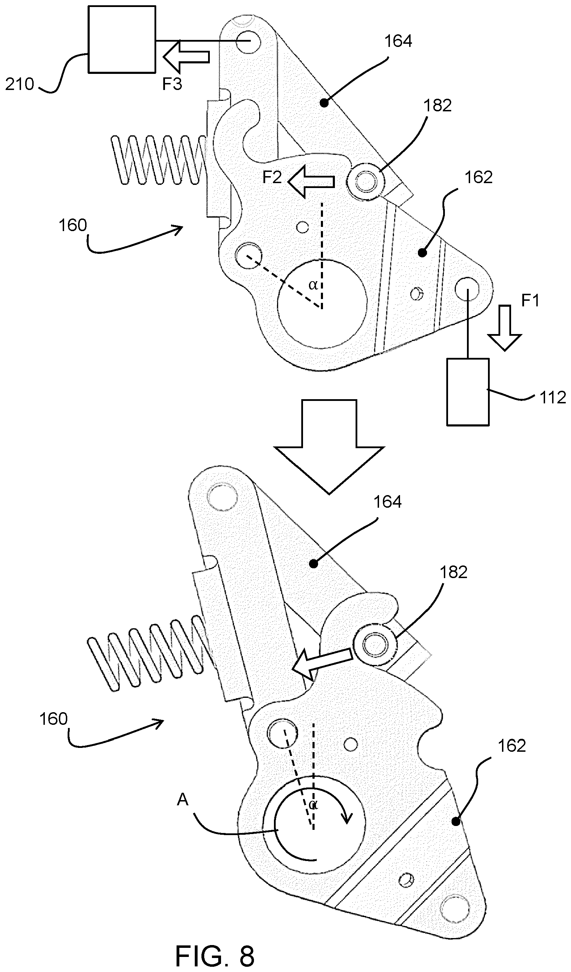

Figure 8 shows how the release unit is adjusted from the first stable configuration to the second stable configuration. The top image shows the first stable configuration. A first force F1 is applied to the concave by the crop. This force is counterbalanced by a spring force F2 and a resistance force of the height adjustment unit.

When the force F1 overcomes the spring force, the first frame element rotates, such that the angle α between them changes as shown by arrow A. In the second stable configuration, the angle between the first and second limbs 164a, 164b is smaller, as the roller has been pulled by the spring into the second notch. Thus, there is a rotation between the first and second frame elements and a rotation between the first and second limbs.

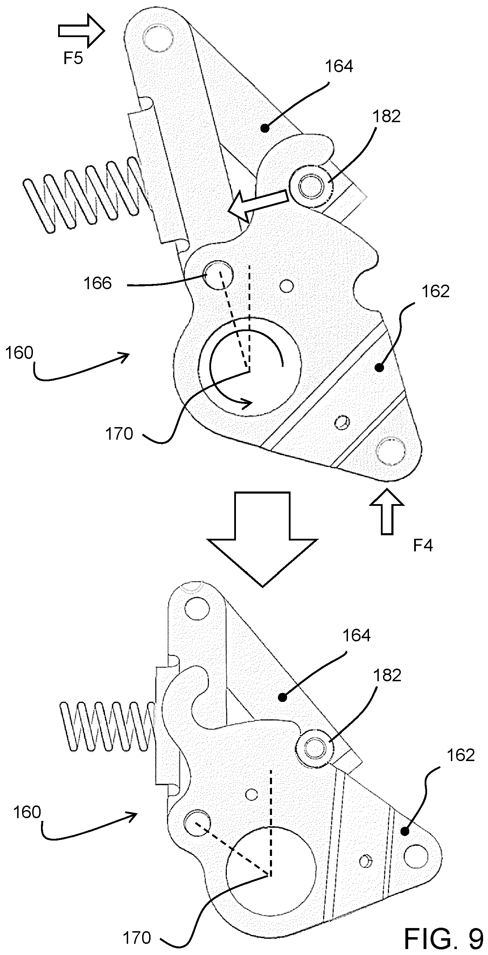

Figure 9 shows how the release unit may be reset from the second stable configuration to the first stable configuration. The top image shows the second stable configuration.

A first approach is for a reset force F4 to be applied manually to the concave. The reaction to this force is provided by the height adjustment unit.

A second approach is for a reset force F5 to be applied by the height adjustment unit. The reaction to this force is provided by the concave (which has bottomed out at is lowest height). The height adjustment unit then act as a push-back-and-lock mechanism. When the release unit is back to the first configuration, the operator can again reset the system to function with the desired harvesting configuration.

In each case, the first frame element rotates back to the first stable orientation.

The offset between the axis of the pivot connection 166 and the first mounting 170 enables the reset mechanism to be implemented by pushing the concaves or pushing the roller back into the notched as explained above.

The release unit functions as an inline safety system that acts directly on the protection, in particular the rotary control shaft. The system can be applied independently to two concaves which means the operator can continue harvesting. The operator can however operate with reduced harvesting speed (throughput) and reset the system on-the-go. Alternatively, the operator can stop harvesting and reset the system. The desired option can be manually set from the combine terminal. The release unit has simple technology and may also be retrofitable.

Another aspect is to provide sensing of the configuration of the release unit so that the operator of the combine harvester can be notified that a release has taken place and optionally also perform an automatic reset. The sensing determines if the first and second frame elements are in the first or second stable angular orientation.

Geo-referencing and mapping the release events will provide input data for other applications. In one simple example, the biasing force may be increased in future harvest operations around the location at which a release occurred in the previous harvest. In another example, the release event may be combined with crop throughput data to make an educated guess as to whether the release was due to heavy crop flow or a one-off foreign object (e.g., a rock). In future harvest operations the bias pressure (if adjustable) may be slackened off if there is a rock in the vicinity, whereas the bias pressure may be increased if a dense crop flow is expected.

The machine may also use the release data in a more complex auto-setting algorithm wherein the machine may 'learn' that a certain combination of settings leads to an increased frequency of concave overload occurrences.

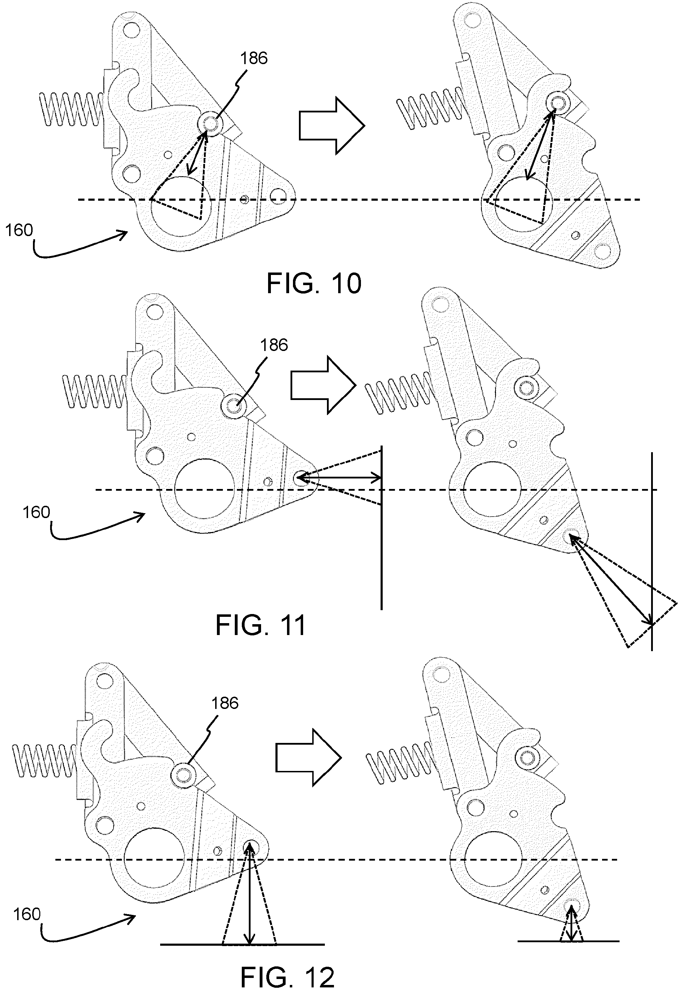

Figures 10 to 15 show various possible sensor approaches. In each case, the release unit is shown in the first and second configurations.

Figures 10 to 12 show a distance sensor for sensing a distance between a first and second locations of the release unit, wherein the distance depends on the configuration. In the example of Figure 10, the first location is the roller 186 and the second location is the first mounting (to the rotary control shaft). As can be seen in Figure 10, the distance between the two depends on the configuration.

In the example of Figure 11, the first location is the roller 186 and the second location is an external vertical reference target. In this case, the sensor may be considered to comprise a direction sensor for sensing an angle of a component of the release unit (i.e. the orientation of the first frame element), wherein the direction depends on the configuration.

In the example of Figure 12, the first location is the roller 186 and the second location is an external horizontal reference target.

The reference target may be dedicated target or it may be a part of the existing structure of the combine harvester.

The distance sensor may for example comprise an ultrasound sensor, a radar sensor, a laser range sensor or a capacitive sensor. An ultrasonic distance sensor for example measures proximity by emitting high-frequency soundwaves and recording the time elapsed before an echo reflects to the transducer. The time taken for the specific frequency to return to the signal transducer is the round trip time; the total distance traveled from the ultrasonic emitter to the object and back. To determine proximity to an object, the ultrasonic distance sensor multiplies the roundtrip time by the speed of sound. Radar sensing is another contactless technology which operates in the spectrum between 30GHz and 300GHz. The small wavelengths enable sub-mm range accuracy.

IR light-emitting diodes (LEDs) may be used to provide distance measurement by triangulation. When the LED focuses a beam of light on a surface, that light is reflected in all directions. A distance sensor adjacent to the LED source acquires a reflected signal and an integrated charge-coupled device (CCD) chip defines the angle of reflection to calculate distance.

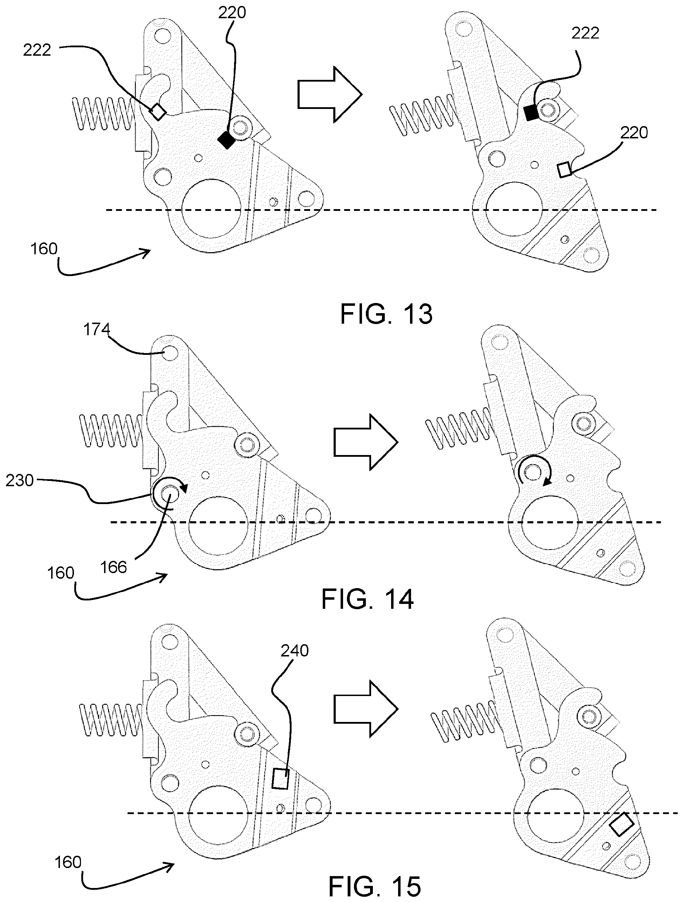

Figure 13 shows a contact sensor arrangement for sensing if the roller is engaged in the first notch 182 or the second notch 184. In the first configuration, a first sensor 220 detects contact. In the second configuration, a second sensor 222 detects contact.

The contact sensor for example comprises a contact switch, or an electrical circuit which is completed by the contact between the roller and a contact terminal at each of the notches. The roller is for example electrically grounded, so that when the roller makes contact with the contact terminal, a connection to ground results. A microcontroller or logic gate can then determine the current configuration. The contact terminal is isolated from the remainder of the metal body. If neither of the two contacts is recording an electrical contact this is an unwanted state. If both contacts are active, the sensor system is likely to be electrically broken and should be serviced.

Various electrical circuits for detecting such contact are of course possible.

Figure 14 shows a rotation sensor 230 for sensing a rotation angle between first and second components of the release unit, wherein the rotation angle depends on the configuration. The rotation sensor is thus at the pivot connection 166. The rotation sensor may instead be at the second connection point 174 since, as explained above, the angle between the two limbs of the second frame element also depends on the configuration of the release unit.

The rotation sensor comprises a rotary encoder, or so-called shaft encoder, for converting the angular position or motion of a shaft or axle to an analog or digital output signals. The rotary encoder may be absolute or incremental. The rotation sensor may be mechanical, optical or magnetic. A rotary potentiometer may be used.

Figure 15 shows an inertia measurement unit 240, i.e. an accelerometer and/or gyroscope, for sensing a motion or position which depends on the configuration.

As mentioned above, the operator can continue harvesting with one concave released, and while the release unit resets. However, it may then be desired to slow the combine harvester down and harvest at a slower speed until the system has reset (typically taking less than 30 seconds).

A controller can then receive the speed of the combine harvester as input for example from a GPS (or GNSS) sensor, rotary encoder connected to the front wheels, IMU (Inertial Measurement Unit), ground facing Doppler radar or an optical flow sensor facing the ground.

Another sensing approach which may be used is to predict when a release function is about to be triggered, so that action can be taken, e.g. slowing down the combine harvester, to prevent the triggering of the release mechanism.

As explained above, the concave position is dependent on the rotational position of the associated rocker shaft. Before a release is triggered, there is an increased torque exerted on the rocker shaft, and this can be sensed to provide advance warning that a trigger event is likely to arise. Remedial action may then be taken. It is noted that the force or torque sensing is not limited to a rotary control shaft. The concave height may be adjusted by an arrangement of levers and pivots, but again there will be forces present which depend on the crop which can be sensed to detect an imminent blockage and hence release function.

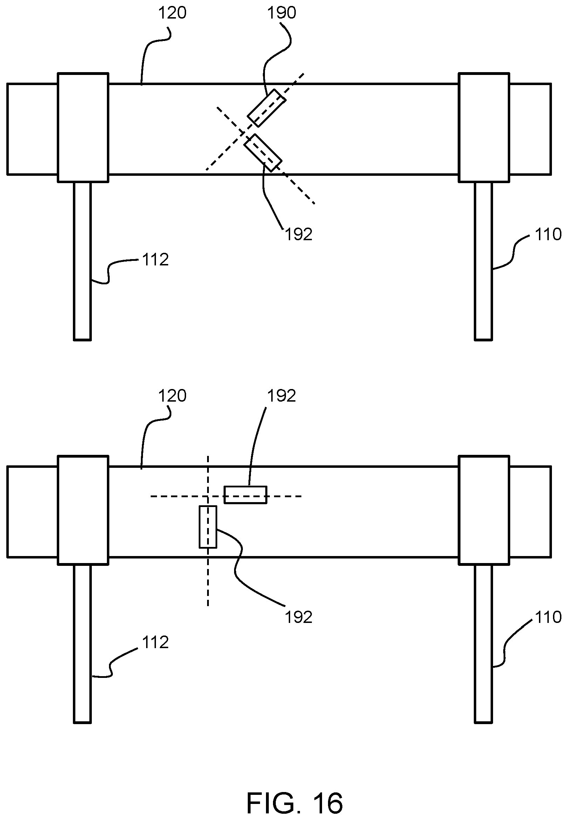

The top image of Figure 16 shows sensors 190 applied to the rocker shaft to measure a torque applied to the shaft, by measuring compression and tension in orthogonal direction. The bottom image shows sensors 192 for measuring axial and transverse forces applied to the rocker shaft. The sensors comprise strain gauges. The strain gauge measurements are amplified for example using operation amplifier circuits, and converted to digital signals for processing by a processor.

The strain measurements are for example compared with thresholds to determine when a release function is imminent. In response to thresholds being passed, a warning may be provided or automated actions may be taken such as slowing down the speed of the combine harvester. This slows down the material intake into the threshing system. The speed may be adjusted in iterative steps, until eventually the combine harvester is stopped if the excess strain has not been resolved. In such a case, the operator is told that a manual inspection is required since it is likely that there is an error in the material handling process.

The strain gauges may be electrical or optical. A pattern of strain gauges, for example with 45 degree or 90 degree relative angular orientations may be used. The strain gauges enable forces to be measured as well as linear or rotational displacements. Thus, twist and compression of the rocker shaft can be measured. The force or torque sensing may avoid the need for a concave release mechanism. However, the force or torque sensing may be combined with the release unit as described above.

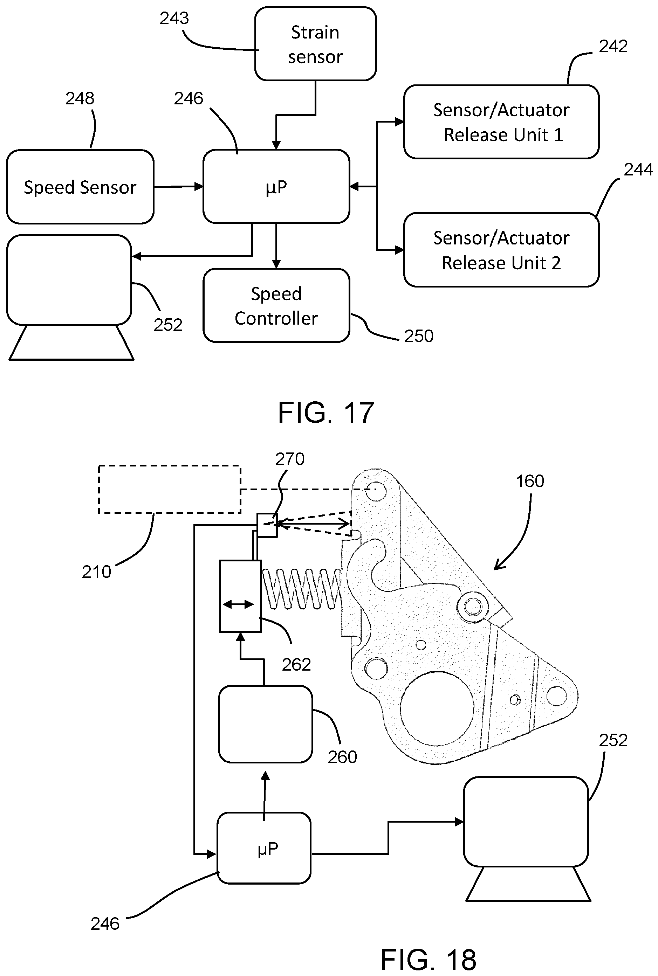

Figure 17 shows how the combine harvester speed may be automatically controlled, and shows a control circuit having the control parts 242 of the first release unit (i.e. its sensor and actuator) and the control parts 244 of the second release unit (i.e. its sensor and actuator), as well as the strain sensors 243. The sensing results are reported to a microcontroller 246 as well the speed of the combine harvester from a speed sensor 248. A speed controller 250 then automatically regulates the driving speed of the combine harvester to slow down in response to increased torque (e.g. an imminent release event) or in response to an actual release event and in that case while the blockage is cleared and the release unit is automatically reset by the actuator (which is the height adjustment actuator).

The blockage condition (i.e. configuration of the release units) and speed information is also displayed on a display 252. The system may simply provide advice that the operator should slow down or it may provide the automatic control as explained above. The two speed control measures (based on sensed strain or based on a release configuration) may be used individually or in combination within a system.

Another aspect relates to setting the threshold force at which the release is triggered.

Figure 18 shows a control system for the release unit comprising an actuator 260 for setting a pre-bias of the spring. The actuator 260 is for moving an end support 262 of the spring, for example at an opposite end of the spring to an end which connects to the second frame element. The actuator is controlled by a controller 246, which also controls a display 252 for presenting information to the user. The actuator may be at either end of the spring to change the spring length when the release unit is in the active configuration.

The actuator may be either electrical or hydraulic.

The threshold force from the crop at which the concave is released can be adjusted for different types of crop or other ground conditions.

The pre-bias of the spring can be set in dependence on a location during harvesting. In this way, crop characteristics over area can be taken into account to provide a dynamically adjustable threshold force at which the concave is released, thereby preventing unnecessary release and avoiding damage by through late release.

Figure 18 also shows a distance sensor 270 (which may be any of the types discussed above) for measuring a length of the spring. This is another option for detecting the configuration of the release unit, in the spring length differs between the two configurations. Furthermore, when the crop force starts to pull on the first frame element, and hence push the roller out of its notch, the spring length will change. Thus, the spring length will change when the force is so great that the spring is about to release.

The spring length may also be measured to determine the counterforce applied by the spring for a system in which the force is varied by an actuator as described above.

By combining the sensing information with location information (e.g. rom a GPS system), field crop characteristics over the area of a field being harvested may be gathered. The crop characteristics may be assessed using information about the configuration of the release unit over the area of the field, as discussed above.

If the term "adapted to" is used in the claims or description, it is noted the term "adapted to" is intended to be equivalent to the term "configured to".

Any reference signs in the claims should not be construed as limiting the scope.

## Claims

1. An adjustment and release unit (160) for supporting a concave beneath a threshing unit of a combine harvester (10), the adjustment and release unit (160) comprising:
a spring-biased unit which has a first, active, configuration and a second, released, configuration, wherein the adjustment and release unit is drivable from the first configuration to the second configuration in response to foreign objects entering the threshing unit against the spring bias force;
a sensor for sensing if the adjustment and release unit is in the first or second configuration; and
an output system for reporting the configuration of the adjustment and release unit (160), **characterised in that** the adjustment and release unit further comprises a memory for storing the configuration of the adjustment and release unit (160) together with associated position data indicating the position of the combine harvester (10).

2. The adjustment and release unit of claim 1, wherein the sensor comprises one or more of:
a distance sensor for sensing a distance between a first and second locations of the adjustment and release unit, wherein the distance depends on the configuration;
a direction sensor for sensing an angle of a component of the adjustment and release unit, wherein the direction depends on the configuration;
a rotation sensor (230) for sensing a rotation angle between first and second components of the adjustment and release unit, wherein the rotation angle depends on the configuration;
a contact sensor arrangement for sensing if there is contact at first or second locations between components of the adjustment and release unit, wherein the contact at the first or second location depends on the configuration;
an inertia measurement unit (240) for sensing a motion or position which depends on the configuration.

3. The adjustment and release unit of claims 1 or 2, further comprising an actuator (260) for setting a pre-bias of the spring (180).

4. The adjustment and release unit of claim 3, comprising a distance sensor (270) for measuring a spring length thereby to derive a measure of the pre-bias as well as sensing if the adjustment and release unit is in the first or second configuration.

5. The adjustment and release unit of claim 3 or 4, wherein the actuator (260) is for moving an end support (262) of the spring (180).

6. The adjustment and release unit of any one of claims 1 to 5, comprising a first frame element (162) and a second frame element (164) pivotally connected together at a pivot connection (166), wherein the first and second frame elements (162,164) have first and second stable angular orientations relative to each other,
wherein the first frame element (162) comprises:
a first mounting (170) for fixing the first frame element (162) to a rotary control shaft (120);
a first connection point (172) for connection to a concave support arm which extends to the concave, wherein an angular orientation of the rotary control shaft (120) determines a depth of the concave beneath the adjustment and release unit,
wherein the second frame element (164) comprises:
a second connection point (174) for connection to a concave height adjustment unit; and
the spring (180) for biasing the pivotal connection between the first and second frame elements (162,164) towards the stable orientations,
wherein the adjustment and release unit is adapted to be released from the first stable orientation by a force applied at the first connection point (172) which is sufficient to overcome a biasing force of the spring (180), thereby to enable pivoting of the first and second frame elements (162,164) relative to each other into the second stable orientation.

7. The adjustment and release unit of claim 6, further comprising a height adjustment unit (210) connected to the second connection point (174).

8. The adjustment and release unit of claim 7, wherein the height adjustment unit (210) is controllable to adjust the position of the second connection point (174) to reset the adjustment and release unit from the second stable angular orientation to the first stable angular orientation.

9. A threshing system (20) for a combine harvester (10), comprising:
a threshing unit;
a concave beneath the threshing unit;
the adjustment and release unit of any one of claims 1 to 8 for supporting the concave beneath the threshing unit.

10. The threshing system of claim 9, comprising two or more threshing units, wherein each threshing unit has a respective associated concave and a respective adjustment and release unit of any one of claims 1 to 8, wherein the adjustment and release units are independently controllable.

11. The threshing system of claim 9 or 10, wherein the threshing units comprise axial threshing cylinders.

12. A combine harvester (10) comprising:
a crop cutting head;
the threshing system (20) of any one of claims 9 to 11; and
a grain cleaning system for receiving the cut and threshed crop material.

13. The combine harvester of claim 12 further comprising a controller (250) adapted to:
reduce the speed of the combine harvester (10) in response to sensing transition of the adjustment and release unit to the second configuration;
maintain a reduced speed during resetting of the adjustment and release unit to the first configuration; and
increase the speed of the combine harvester (10) after the resetting.

## Patentansprüche

1. Verstell- und Freigabeeinheit (160) zum Stützen eines Dreschkorbs unter einem Dreschwerk eines Mähdreschers (10), wobei die Verstell- und Freigabeeinheit (160) Folgendes umfasst:
eine federvorgespannte Einheit, die eine erste, aktive, und eine zweite, freigegebene, Konfiguration aufweist, wobei die Verstell- und Freigabeeinheit als Reaktion darauf, dass Fremdkörper in das Dreschwerk eindringen, entgegen der Federvorspannkraft aus der ersten Konfiguration in die zweite Konfiguration angetrieben werden kann;
einen Sensor zum Erfassen, ob sich die Verstell- und Freigabeeinheit in der ersten oder der zweiten Konfiguration befindet; und
ein Ausgabesystem zum Mitteilen der Konfiguration der Verstell- und Freigabeeinheit (160), **dadurch gekennzeichnet, dass** die Verstell- und Freigabeeinheit ferner einen Speicher zum Speichern der Konfiguration der Verstell- und Freigabeeinheit (160) zusammen mit zugeordneten Positionsdaten zur Angabe der Position des Mähdreschers (10) umfasst.

2. Verstell- und Freigabeeinheit nach Anspruch 1, wobei der Sensor eine/n oder mehrere von Folgenden umfasst:
einen Abstandssensor zum Erfassen eines Abstands zwischen einer ersten und zweiten Position der Verstell- und Freigabeeinheit, wobei der Abstand von der Konfiguration abhängt;
einen Richtungssensor zum Erfassen eines Winkels einer Komponente der Verstell- und Freigabeeinheit, wobei die Richtung von der Konfiguration abhängt;
einen Drehsensor (230) zum Erfassen eines Drehwinkels zwischen der ersten und der zweiten Komponente der Verstell- und Freigabeeinheit, wobei der Drehwinkel von der Konfiguration abhängt;
eine Kontaktsensoranordnung zum Erfassen, ob es zwischen Komponenten der Verstell- und Freigabeeinheit Kontakt an der ersten oder der zweiten Position gibt, wobei der Kontakt an der ersten oder zweiten Position von der Konfiguration abhängt;
eine Trägheitsmesseinheit (240) zum Erfassen einer Bewegung oder Position, die von der Konfiguration abhängt.

3. Verstell- und Freigabeeinheit nach Anspruch 1 oder 2, die ferner einen Aktuator (260) zum Einstellen einer Vorspannung der Feder (180) umfasst.

4. Verstell- und Freigabeeinheit nach Anspruch 3, die einen Abstandssensor (270) zum Messen einer Federlänge, um dadurch eine Messung der Vorspannung zu erhalten sowie zu erfassen, ob sich die Verstell- und Freigabeeinheit in der ersten oder der zweiten Konfiguration befindet, umfasst.

5. Verstell- und Freigabeeinheit nach Anspruch 3 oder 4, wobei der Aktuator (260) zum Bewegen einer Endstütze (262) der Feder (180) vorgesehen ist.

6. Verstell- und Freigabeeinheit nach einem der Ansprüche 1 bis 5, die ein erstes Rahmenelement (162) und ein zweites Rahmenelement (164) umfasst, die an einer Schwenkverbindungsstelle (166) schwenkbar miteinander verbunden sind, wobei das erste und das zweite Rahmenelement (162,164) eine erste und zweite stabile Winkelausrichtung bezüglich einander aufweisen,
wobei das erste Rahmenelement (162) Folgendes umfasst:
eine erste Befestigung (170) zum Fixieren des ersten Rahmenelements (162) an einer Drehsteuerwelle (120);
einen ersten Verbindungspunkt (172) zur Verbindung mit einem Dreschkorb-Stützarm, der sich bis zu dem Dreschkorb erstreckt, wobei eine Winkelausrichtung der Drehsteuerwelle (120) eine Tiefe des Dreschkorbs unter der Verstell- und Freigabeeinheit bestimmt,
wobei das zweite Rahmenelement (164) Folgendes umfasst:
einen zweiten Verbindungspunkt (174) zur Verbindung mit einer Dreschkorb-Höhenverstelleinheit; und
die Feder (180) zum Vorspannen der Schwenkverbindung zwischen dem ersten und dem zweiten Rahmenelement (162,164) in die stabilen Ausrichtungen,
wobei die Verstell- und Freigabeeinheit dazu ausgeführt ist, durch eine an den ersten Verbindungspunkt (172) angelegte Kraft, die ausreicht, um eine Vorspannkraft der Feder (180) zu überwinden, aus der ersten stabilen Ausrichtung freigegeben zu werden, wodurch das Schwenken des ersten und des zweiten Rahmenelements (162, 164) bezüglich einander in die zweite stabile Ausrichtung ermöglicht wird.

7. Verstell- und Freigabeeinheit nach Anspruch 6, die ferner eine Höhenverstelleinheit (210) umfasst, die mit dem zweiten Verbindungspunkt (174) verbunden ist.

8. Verstell- und Freigabeeinheit nach Anspruch 7, wobei die Höhenverstelleinheit (210) dahingehend steuerbar ist, die Position des zweiten Verbindungspunkts (174) zum Zurücksetzen der Verstell- und Freigabeeinheit von der zweiten stabilen Winkelausrichtung in die erste stabile Winkelausrichtung zu verstellen.

9. Dreschsystem (20) für einen Mähdrescher (10), das Folgendes umfasst:
ein Dreschwerk;
einen Dreschkorb unter dem Dreschwerk;
die Verstell- und Freigabeeinheit nach einem der Ansprüche 1 bis 8 zum Stützen des Dreschkorbs unter dem Dreschwerk.

10. Dreschsystem nach Anspruch 9, das zwei oder mehr Dreschwerke umfasst, wobei jedes Presswerk einen entsprechenden zugeordneten Dreschkorb und eine entsprechende Verstell- und Freigabeeinheit nach einem der Ansprüche 1 bis 8 aufweist, wobei die Verstell- und Freigabeeinheiten unabhängig steuerbar sind.

11. Dreschsystem nach Anspruch 9 oder 10, wobei die Dreschwerke axiale Dreschtrommeln umfassen.

12. Mähdrescher (10), der Folgendes umfasst:
einen Erntegutschneidvorsatz;
ein Dreschsystem (20) nach einem der Ansprüche 9 bis 11; und
ein Getreidereinigungssystem zum Aufnehmen des geschnittenen und gedroschenen Erntegutmaterials.

13. Mähdrescher nach Anspruch 12, der ferner eine Steuerung (250) Umfasst, die dazu ausgelegt ist:
die Geschwindigkeit des Mähdreschers (10) als Reaktion darauf, das ein Übergang der Verstell- und Freigabeeinheit zur zweiten Konfiguration erfasst wird, zu reduzieren;
beim Zurücksetzen der Verstell- und Freigabeeinheit in die erste Konfiguration eine reduzierte Geschwindigkeit beizubehalten; und
die Geschwindigkeit des Mähdreschers (10) nach dem Zurücksetzen zu erhöhen.

## Revendications

1. Unité d'ajustement et de libération (160) destinée à supporter un contre-batteur en dessous d'une unité de battage d'une moissonneuse-batteuse (10), l'unité d'ajustement et de libération (160) comprenant :
une unité sollicitée par ressort qui a une première configuration active, et une seconde configuration libérée, dans laquelle l'unité d'ajustement et de libération est entraînable de la première configuration à la seconde configuration en réponse à des objets étrangers entrant dans l'unité de battage contre la force de sollicitation de ressort ;
un capteur destiné à détecter si l'unité d'ajustement et de libération est dans la première ou seconde configuration ; et
un système de sortie destiné à rapporter la configuration de l'unité d'ajustement et de libération (160), **caractérisée en ce que** l'unité d'ajustement et de libération comprend en outre une mémoire destinée à stocker la configuration de l'unité d'ajustement et de libération (160) conjointement avec des données de position associées indiquant la position de la moissonneuse-batteuse (10).

2. Unité d'ajustement et de libération de la revendication 1, dans laquelle le capteur comprend un ou plusieurs capteurs parmi :
un capteur de distance destiné à détecter une distance entre des premier et second emplacements de l'unité d'ajustement et de libération, dans laquelle la distance dépend de la configuration ;
un capteur de direction destiné à détecter un angle d'un composant de l'unité d'ajustement et de libération, dans laquelle la direction dépend de la configuration ;
un capteur de rotation (230) destiné à détecter un angle de rotation entre des premier et second composants de l'unité d'ajustement et de libération, dans laquelle l'angle de rotation dépend de la configuration ;
un agencement de capteur de contact destiné à détecter s'il y a un contact à des premier ou second emplacements entre des composants de l'unité d'ajustement et de libération, dans laquelle le contact au premier ou second emplacement dépend de la configuration ;
une unité de mesure d'inertie (240) destinée à détecter un mouvement ou une position qui dépend de la configuration.

3. Unité d'ajustement et de libération des revendications 1 ou 2, comprenant en outre un actionneur (260) pour régler une pré-sollicitation du ressort (180).

4. Unité d'ajustement et de libération de la revendication 3, comprenant un capteur de distance (270) destiné à mesurer une longueur de ressort pour ainsi dériver une mesure de la pré-sollicitation ainsi qu'à détecter si l'unité d'ajustement et de libération est dans la première ou seconde configuration.

5. Unité d'ajustement et de libération de la revendication 3 ou 4, dans laquelle l'actionneur (260) est destiné à déplacer un support d'extrémité (262) du ressort (180).

6. Unité d'ajustement et de libération de l'une quelconque des revendications précédentes 1 à 5, comprenant un premier élément de bâti (162) et un second élément de bâti (164) raccordés ensemble de façon pivotante au niveau d'un raccordement de pivotement (166), dans laquelle les premier et second éléments de bâti (162, 164) ont des première et seconde orientations angulaires stables l'un relativement à l'autre,
dans laquelle le premier élément de bâti (162) comprend :
un premier organe de montage (170) pour fixer le premier élément de bâti (162) à un arbre de commande rotatif (120) ;
un premier point de raccordement (172) pour le raccordement à un bras de support de contre-batteur qui s'étend jusqu'au contre-batteur, dans laquelle une orientation angulaire de l'arbre de commande rotatif (120) détermine une profondeur du contre-batteur en dessous de l'unité d'ajustement et de libération,
dans laquelle le second élément de bâti (164) comprend :
un second point de raccordement (174) pour le raccordement à une unité d'ajustement de hauteur de contre-batteur ; et
le ressort (180) pour solliciter le raccordement pivotant entre les premier et second éléments de bâti (162, 164) vers les orientations stables,
dans laquelle l'unité d'ajustement et de libération est adaptée pour être libérée de la première orientation stable par une force appliquée au niveau du premier point de raccordement (172) qui est suffisante pour dépasser une force de sollicitation du ressort (180), pour ainsi permettre le pivotement des premier et second éléments de bâti (162, 164) l'un relativement à l'autre jusque dans la seconde orientation stable.

7. Unité d'ajustement et de libération de la revendication 6, comprenant en outre un unité d'ajustement de hauteur (210) raccordée au second point de raccordement (174).

8. Unité d'ajustement et de libération de la revendication 7, dans laquelle l'unité d'ajustement de hauteur (210) peut être commandée pour ajuster la position du second point de raccordement (174) pour remettre à l'état initial l'unité d'ajustement et de libération de la seconde orientation stable angulaire à la première orientation stable angulaire.

9. Système de battage (20) pour une moissonneuse-batteuse (10), comprenant :
une unité de battage ;
un contre-batteur en dessous de l'unité de battage ;
l'unité d'ajustement et de libération de l'une quelconque des revendications précédentes 1 à 8 destinée à supporter le contre-batteur en dessous de l'unité de battage.

10. Système de battage de la revendication 9, comprenant deux ou plus de deux unités de battage, dans lequel chaque unité de battage a un contre-batteur associé respectif et une unité d'ajustement et de libération respective de l'une quelconque des revendications précédentes 1 à 8, dans lequel les unités d'ajustement et de libération sont commandables indépendamment.

11. Système de battage de la revendication 9 ou 10, dans lequel les unités de battage comprennent des cylindres de battage axiaux.

12. Moissonneuse-batteuse (10), comprenant :
une tête de coupe de culture ;
le système de battage (20) de l'une quelconque des revendications précédentes 9 et 11 ; et
un système de nettoyage de grains destiné à recevoir la matière de culture coupée et battue.

13. Moissonneuse-batteuse de la revendication 12, comprenant en outre une unité de commande (250) adaptée pour :
réduire la vitesse de la moissonneuse-batteuse (10) en réponse à la détection d'une transition de l'unité d'ajustement et de libération à la seconde configuration ;
maintenir une vitesse réduite durant une remise à l'état initial de l'unité d'ajustement et de libération à la première configuration ; et
augmenter la vitesse de la moissonneuse-batteuse (10) après la remise à l'état initial.
